# EUROPEAN PATENT SPECIFICATION

(11) **EP 1 821 046 B1**
(45) Date of publication and mention of the grant of the patent: **19.04.2017**
(21) Application number: 07107263.1
(22) Date of filing: 11.06.2002
(51) Int. Cl.: F24H 8/00, F24H 9/00, F28D 21/00, F28F 1/40, F28F 13/12, F28F 17/00

(54) **A condensing boiler**
Kondensationsboiler
Chaudière à condensation

(30) Priority: 11.06.2001 IE 20010554
(43) Date of publication of application: 22.08.2007
(62) Divisional of application: 02394072.9
(73) Proprietor: ALLEY ENTERPRISES LIMITED, Birr, County Offaly (IE)
(72) Inventor: Grant, Stephen William John, County Offaly (IE)
(74) Representative: O'Connor, Donal Henry

(56) References cited:
- DE-A- 3 019 810
- DE-U- 8 617 733
- FR-A- 2 659 730
- GB-A- 846 672
- US-A- 665 658
- US-A- 1 056 373
- US-A- 3 648 754
- US-A- 4 090 599
- US-A- 5 027 749

## Description

### Introduction

The present invention relates to condensing units for water heating boilers and in particular to condensing boilers in which the condensing unit is integrally fitted. Generally, such a heating boiler has a water feed and return connection for system water and the condensing unit comprises a body having heat exchanger tanks surrounding a condenser flue for connection to the boiler exhaust gas flue or indeed forms part of the boiler exhaust flue, the heat exchanger tanks having an inlet for connection to the system return pipe and an outlet for connection to the boiler return connector. Essentially the condensing unit acts as a pre-heater for the boiler water.

Under certain conditions, when the system water temperature feeding the condensing unit is relatively low, additionally the exhaust gases will be cooled below the dew point of certain of the components of the exhaust gases which will then condense giving up the latent heat of condensation such that under these conditions, the actual efficiency of the boiler can exceed a nominal 100%, that is to say, that the actual heat input of the burning fuel such as oil or gas, particularly oil, will exceed the theoretically possible heat exchange between the burning fuel and the system water, the addition being provided by the condensing of the exhaust gases. These exhaust gases contain nitric oxide and in many instances, it is required, for environmental reasons, to collect the nitric oxide and dispose of it in some way, usually by neutralisation.

Generally speaking, when the water entering the condensing unit is of the order of 30°C and the water outlet having been heated by the flue gases is of the order of 50°C, then the flue gases which originally entered the condenser at approximately 180°C are cooled to approximately 45°C and condensation occurs. While, if the water is entering the condenser at approximately 55°C, it will tend to be delivered out of the condenser and into the boiler at 75°C with the flue gases, at that stage, usually being of the order of 190°C, dropping to 65°C without condensation.

Many boilers operate at relatively low efficiency of the order of 85% while other boilers operate without condensing units at much higher efficiencies of the order of 95% under full load and in certain cases, greater or less efficiency under part load has been achieved.

The main problem with the use of condensing units, either in conjunction with as an add-on attachment or Integrally mounted within the boiler, is the difficulty In achieving efficient heat transfer with an easily maintained unit. It is known to provide relatively complex and intricately constructed condensing units which are very difficult to dean as the exhaust flue gases from the boiler inevitably cause a build-up of carbon and other contaminants which, in addition to restricting the flue gas flow, also greatly reduce the heat transfer between the flue gases and the system water. Further, since the flue gases are corrosive, it is vital to have a device which will not deteriorate during use. Finally, as the heat saving is relatively slight, the cost of any such condensing unit must be relatively small, particularly with heat efficient boilers.

Essentially, what is required, is a condensing unit that would be simple and relatively inexpensive to manufacture, easy to clean and maintain and which will additionally not deteriorate during use.

Document US-A-5027749 discloses a gas fired water heater having lower and upper water tanks and a central flue which extends through the tanks. This publication describes an efficient yet simple design for a water heater which utilises multiple stages to heat water.

Document DE 3019810 A discloses an efficient heat transfer device having a combustion chamber and heat transfer tubes through which combustion gases flow in a downward direction. To achieve this, a blower is provided to force products from the combustion chamber through flue gas passages.
Document US-A-5027749 and DE 3019810 A disclose the preamble of claim 1.

Documents US 665,658, US 1,056,373 and GB 846,672 show various baffle arrangements. The present invention is directed towards achieving at least some of these objects.

### Statements of Invention

According to the invention, there is provided a condensing unit for a water heating boiler having a feed connector and a return connector for system water, the condensing unit comprising a body having a heat exchanger tank contacting a condenser flue having an inlet and an outlet for connection to a boiler exhaust gas flue, the heat exchanger tank having an inlet for connection to a system return pipe and an outlet for connection to the boiler return connector characterised in that the condenser flue comprises an elongate enclosed channel and a removable baffle assembly mounted therein, in which the baffle assembly comprises a longitudinally split tube in two parts to fit within the channel and in which at least one tube part carries inwardly directed combustion gas contacting baffle plates.

In one embodiment, the channels are inclined downwardly from adjacent the inlet to the outlet of the condenser flue.

In another embodiment, the condenser flue inlet forms a gas inlet manifold for connection to the combustion chamber of the boiler, and the condenser flue outlet forms a gas outlet manifold for connection to the gas flue.

In this latter embodiment, preferably the baffle assembly extends into the gas inlet manifold.

In another embodiment of the invention, a condensate drain-off pipe is provided adjacent the outlet for the condenser flue.

In one embodiment, the channel is a tube and the baffle assembly forms a loose fit within the tube. Additionally, cut-out portions may be provided in the plate to provide further flue gas passageways.

In this latter embodiment, ideally cut-away slots are provided in the periphery of the plate to form liquid drain-off holes.

Further, the invention is directed towards providing a boiler incorporating such a condensing unit.

### Detailed Description of the Invention

The invention will be more clearly understood from the following description of an embodiment thereof, given by way of example only, with reference to the accompanying drawings, in which:-
Fig. 1 is a typical side sectional view of a boiler incorporating a condensing unit according to the invention,
Fig. 2 is a front part sectional view,
Fig. 3 is a detailed sectional view of the condensing unit fitted as shown in Fig. 1,
Fig. 4 is a perspective view of a baffle assembly used in the condensing unit,
Fig. 5 is a detail of a baffle assembly fitted in a tube of the condensing unit,
Fig. 6 is a view similar to Fig. 3 with the baffle assemblies removed,
Fig. 7 is a plan sectional view of the condensing unit,
Fig. 8 is a view similar to Fig. 4 of an alternative construction of baffle assembly,
Fig. 9 is a plan view of a plate from which the baffle assembly of Fig. 8 is formed,
Fig. 10 is a perspective view of an alternative construction of baffle assembly according to the invention,
Fig. 11 is a side view of portion of the baffle assembly of Fig. 10,
Fig. 12 is a perspective view of another baffle assembly,
Fig. 13 is a perspective view of portion of the baffle assembly of Fig. 12,
Fig. 14 is a typical cross-sectional view through the baffle assembly of Fig. 12, and
Figs. 15(a) to (e) are perspective views of still further baffle assemblies.

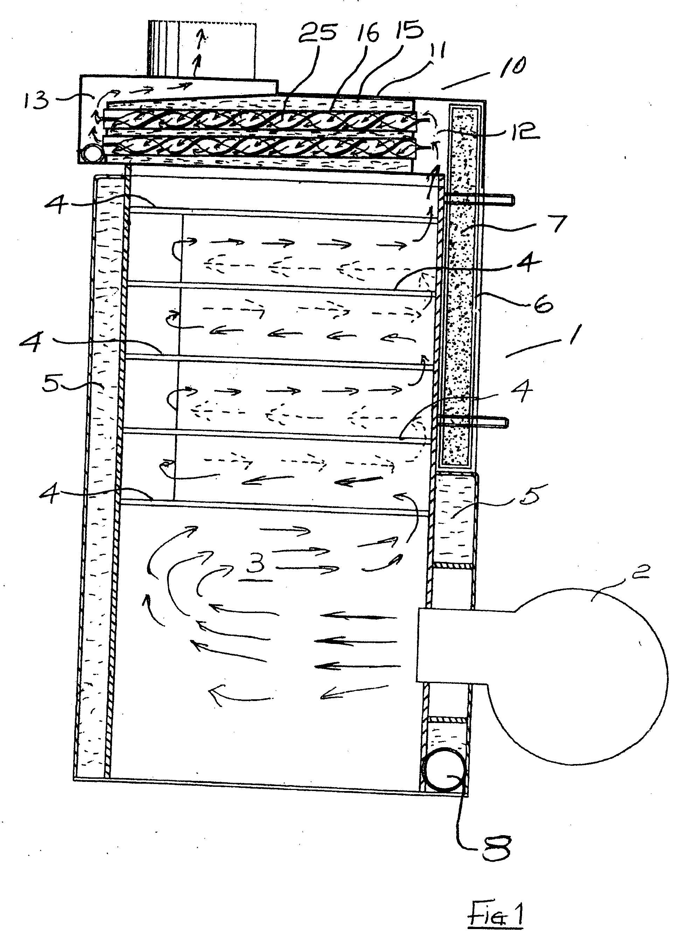

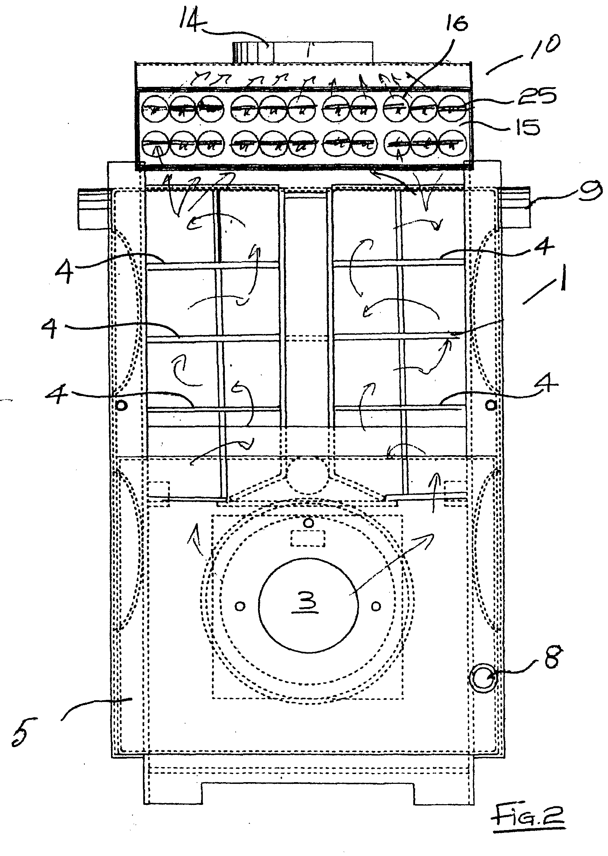

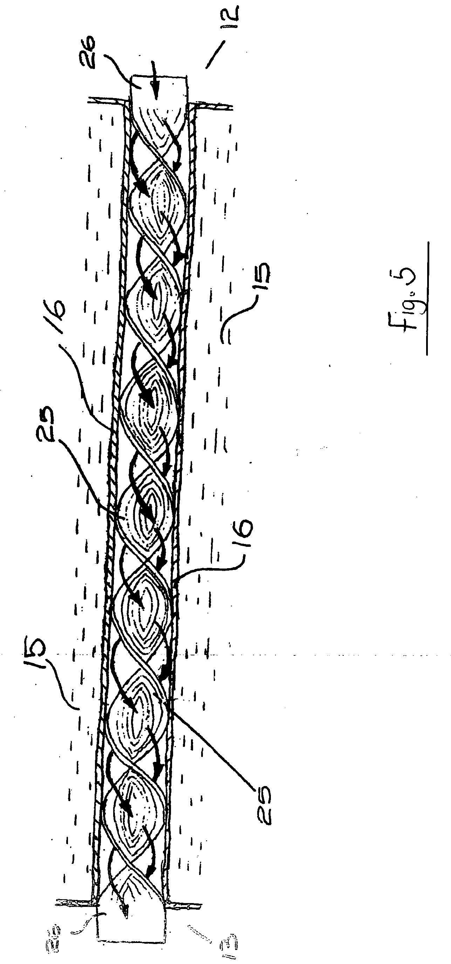

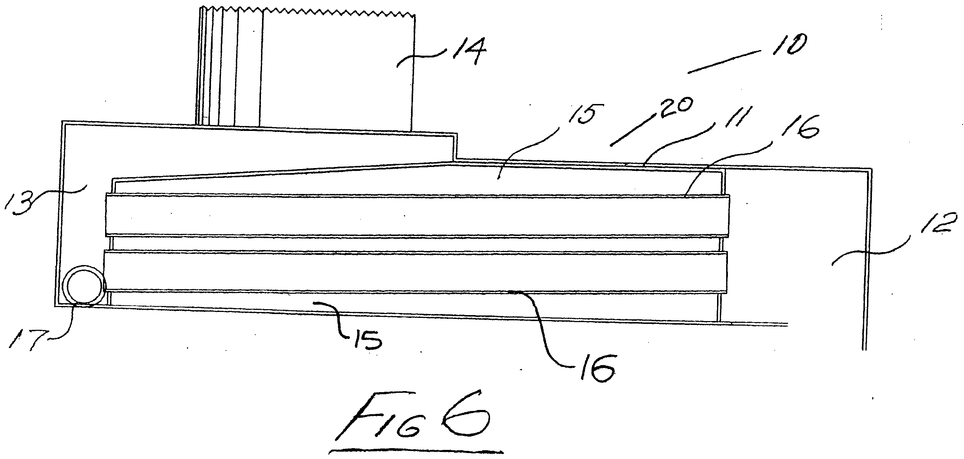

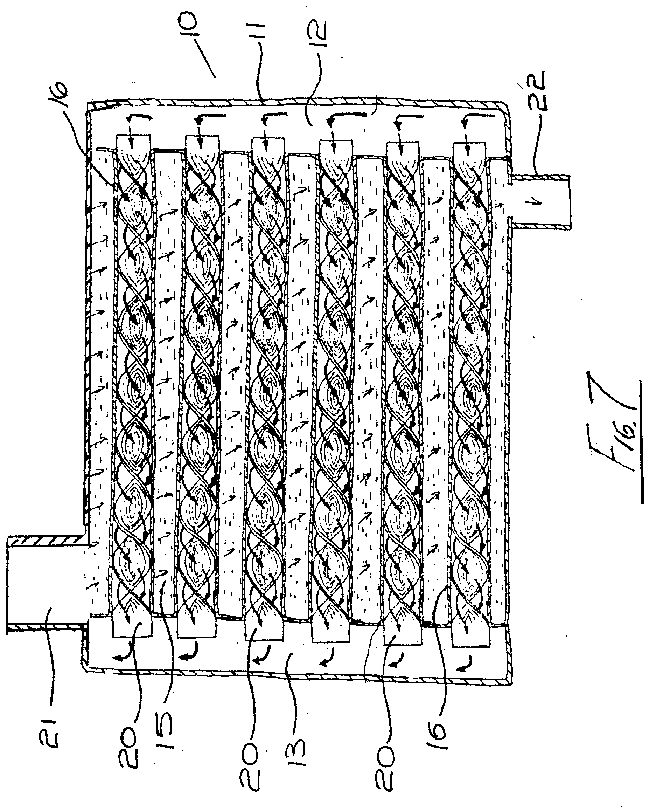

Referring to the drawings and initially to Figs. 1 to 7 inclusive, there is illustrated an oil fired boiler, indicated generally by the reference numeral 1 having an oil burner 2, a combustion chamber 3 mounting baffles 4, together with water tanks 5, all of which are of conventional construction. The boiler 1 has a front door 6 incorporating insulation material 7. Mounted above the boiler 1 and integral therewith is a condensing unit, indicated generally by the reference numeral 10. The boiler 1 has a boiler feed return connector 8 and also a boiler feed connector 9 to system feed, normally the system feed forms a system return pipe for connection to the boiler return connector, however, in this invention, it is connected to the condensing unit 10. The system feed and return pipes are not illustrated.

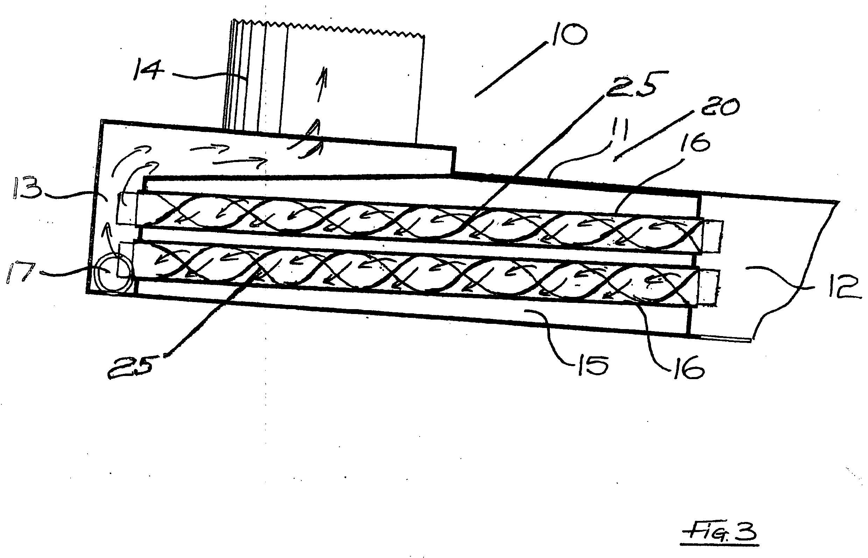

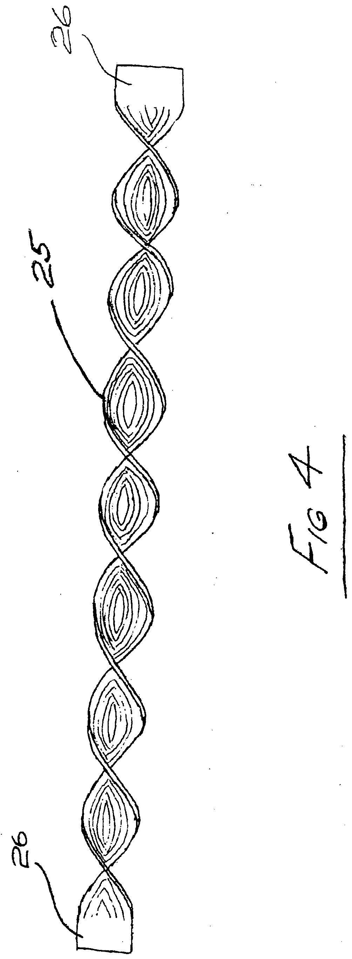

Referring to Fig. 3, the condensing unit 10 comprises an enclosed body 11 forming a condenser flue having a gas inlet and a gas outlet to the boiler exhaust flue, in this embodiment provided by a gas inlet manifold 12 and a gas outlet manifold 13. The gas outlet manifold 13 is connected to a gas flue 14 and the gas inlet manifold 12 is connected to the combustion chamber 3 of the boiler 1. Mounted between the gas inlet manifold 12 and the gas outlet manifold 13 is a heat exchanger tank 15 having mounted therein a condenser flue, indicated generally by the reference numeral 20, provided by what is essentially an elongate enclosed channel 16, in this embodiment through tubes 16 connecting the gas inlet manifold 12 and the gas outlet manifold 13. For ease of reference, as in most cases the channel 16 would be provided by a tube 16 of circular cross-section, the reference numeral 16 is used to identify the channel 16 and the tube 16. Mounted in the gas outlet manifold 13 is a condensate drain-off pipe 17. Mounted within each through tube 16 is a baffle assembly 25 formed from a spirally wound flat plate (Fig. 4), described in more detail below. Effectively, the manifolds 12 and 13 and the through tubes 16 form part of the gas flue 14.

Each baffle assembly 25 is formed from a flat plate twisted around itself and is in this embodiment made slightly longer than the tube 16 for ease of extraction. In this embodiment, the width of the flat plate is so chosen that when twisted, it is a relatively loose fit in the tube 16. A stop may be provided to prevent it being pushed too far into the channel, namely, the tube 16.

The water tank 15 has an inlet 21 for connection to the system return pipe and an outlet 22 for connection to the boiler return connector.

In use, the system water, namely, the return feed water, is delivered from the system feed return pipe to the water tank inlet 21, through the water tank 15, then out the outlet 22 to the boiler return connector 8. Simultaneously, exhaust flue gases are delivered from the combustion chamber 3 to the gas inlet manifold 12 through the pipes 16 and past the baffle assemblies 25 as illustrated by the arrows. Heat exchange with the return feed water occurs. The exhaust flue gases are then delivered out the gas exhaust manifold 13 into the flue 14. Any condensate formed will flow down the tube 16 to the drain-off pipe 17 where they can be collected for future disposal.

The baffle assemblies 25 are easily removed from the tubes 16. Access is through the door 6. It will be appreciated that since the baffle assemblies 25 are a relatively loose fit within the tube 16, they can be relatively easily removed for cleaning. Indeed, it has been found that, in use, there has been relatively little build-up of soot and other contaminants on the baffles, thus relatively infrequent cleaning is required, in contrast to precision built condensing units.

High heat transfer efficiencies have been obtained with the condensing unit according to the invention.

The following are the results of some tests carried out on boilers incorporating condensing units of the invention.

### TESTS

### Boiler Trade Mark VORTEX

### Burner Trade Mark RIELLO RDB1 70-90

### Date of Tests: 12^{th} and 13^{th} December, 2001

The laboratory procedures used for this test work (Procedures OFB9.0 and OFB10.0) follow the methodology specified in BS EN 304 : 1992.

| **Test No. 1** | Nominal Rated Output | 15.0 kW | |
|---|---|---|---|
| | **Boiler efficiency at rated output** | | |
| | Parameter | Requirement | Result |
| | Net boiler efficiency % | 89.3 | 99.8 |

| | **Boiler efficiency at part load** | | |
|---|---|---|---|
| | Parameter | Requirement | Result |
| | Net boiler efficiency % | 89.3 | 100.9 |

| **Test No. 2** | Nominal Rated Output | 20.0 kW | |
|---|---|---|---|
| | **Boiler efficiency at rated output** | | |
| | Parameter | Requirement | Result |
| | Net boiler efficiency % | 89.5 | 100.2 |

| | **Boiler efficiency at part load** | | |
|---|---|---|---|
| | Parameter % | Requirement | Result |
| | Net boiler efficiency | 89.5 | 101.7 |

| **Test No. 3** | Nominal rated output | 26.0 kW | |
|---|---|---|---|
| | **Boiler efficiency at rated output** | | |
| | Parameter % | Requirement | Result |
| | Net boiler efficiency | 89.6 | 99.9 |

| | **Boiler efficiency at part load** | | |
|---|---|---|---|
| | Parameter % | Requirement | Result |
| | Net boiler efficiency | 89.6 | 102.9 |

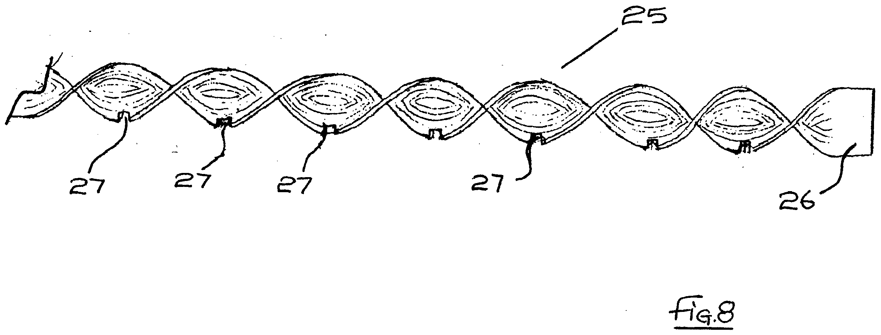

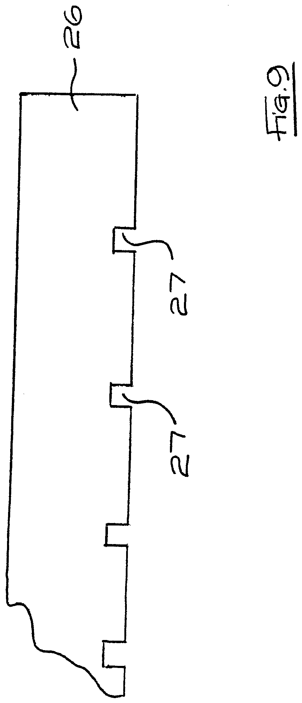

Referring to Figs. 8 and 9, there is illustrated an alternative construction of baffle assembly, again provided by a flat plate 26 which is spirally wound. In this embodiment, there is provided cut-out slots 27 which will assist in the drain-off condensate through the tube 16.

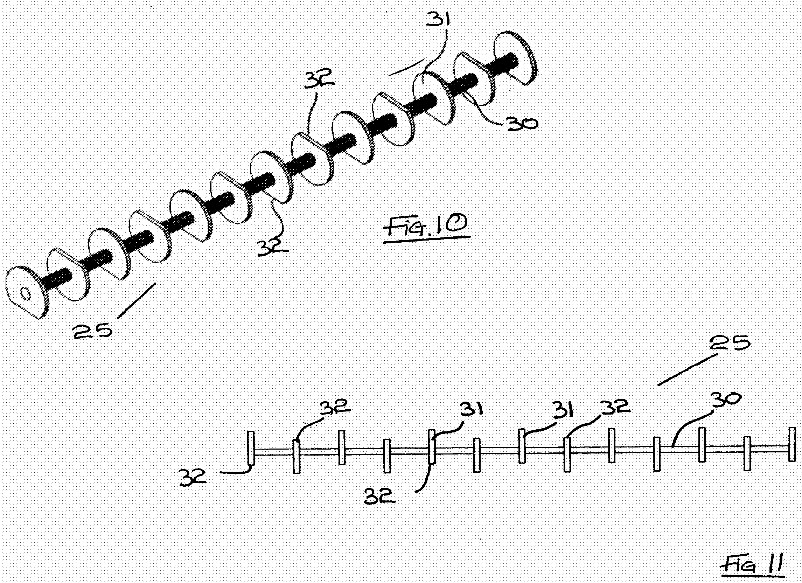

Referring now to Figs. 10 and 11, there is illustrated an alternative construction of baffle assembly, again indicated generally by the reference numeral 25. In this embodiment, the baffle assembly 25 comprises a shaft 30 mounting a plurality of baffle plates 31. Each baffle plate 31 has a cut-out portion 32 to allow the passage of flue gases down through the enclosed channel. It will be seen that this staggered construction of cut-out portions 32 will ensure that the flue gases adopt a tortuous passageway through the baffle assembly 25.

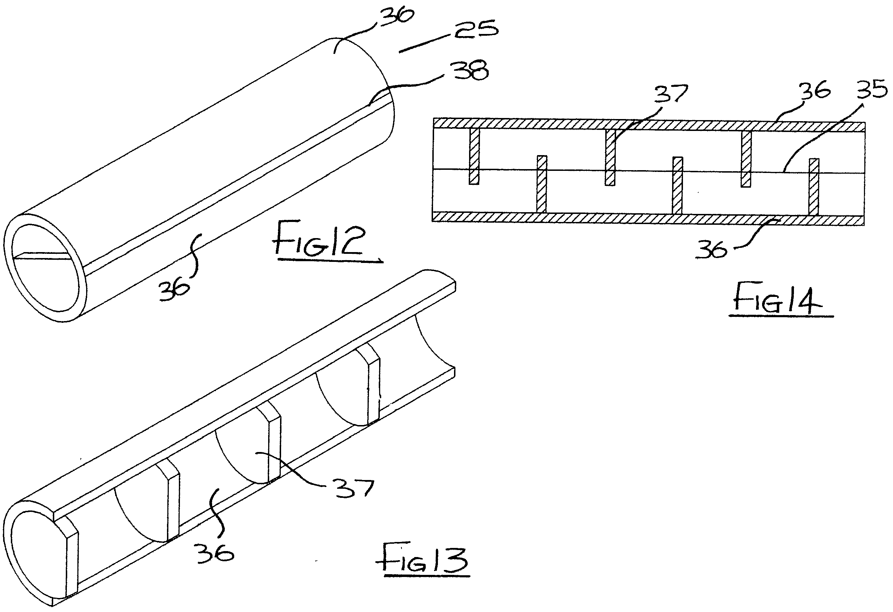

Referring now to Figs. 12 to 14, there is illustrated a still further construction of baffle assembly, again identified by the reference numeral 25, comprising a tube 35 longitudinally split into two tube parts 36. Each tube part 36 carries inwardly directed combustion gas contacting baffles 37. It will be seen, from Fig. 14, how the baffle plates 37 overlap to provide a sinuous passageway for combustion gases through the baffle assembly 25.

It will be appreciated that there will be no need to, in any way, attach the two parts together because the tube 16 will ensure that the baffle assembly 25 stays assembled.

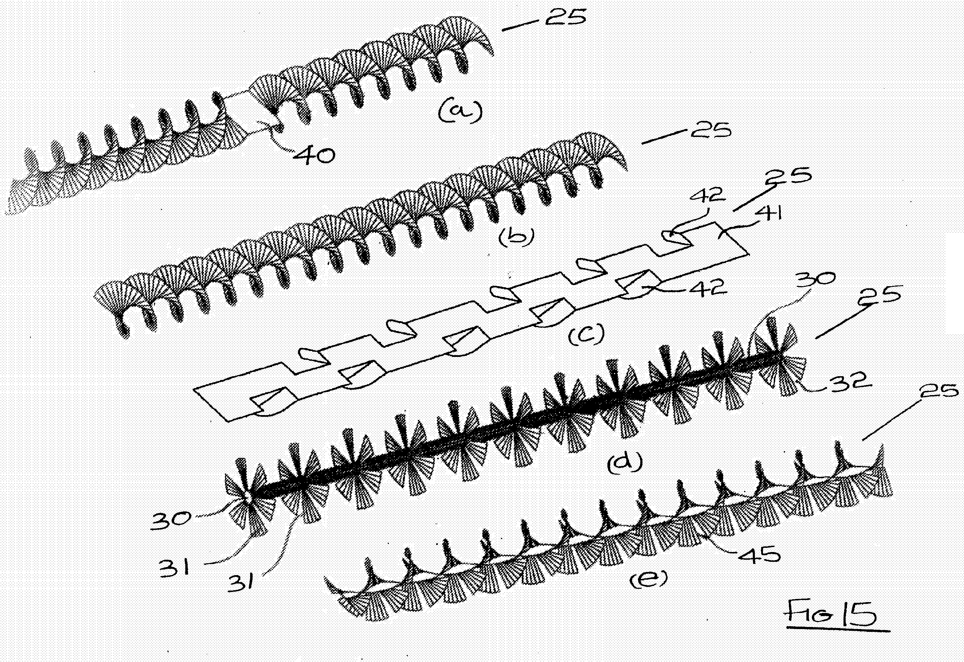

Figs. 15(a) to (e) illustrate further constructions of baffle assembly, each again identified by the reference numeral 25. The baffle assembly 25 of Fig. 15(a) is formed by a plate spirally wound either side of a central plate 40, while the baffle assembly of Fig. 15(b) is essentially the same as that of Figs. 1 to 7. The baffle assembly 25 of Fig. 15(c) comprises a plate 41 mounting a plurality of projecting baffle plates 42. The baffle assembly 25 of Fig. 15(d) is a modification of the baffle assembly of Figs. 10 and 11 and parts similar to those described in these drawings are identified by the same reference numerals. Finally, the baffle assembly 25 of Fig. 15(e) is substantially the same as that of Fig. 15(b), except that it incorporates cut-out portions 45 to provide further flue gas passageways.

It will be appreciated that with most constructions of baffle assembly according to the present invention, where necessary, drain-off slots or cut-outs will be provided on the lowermost portion of the baffle assembly to allow a straight through passageway for condensate which will be acid rich.

It is envisaged that other types of tubing and different sections of tubing can be used and that different types and shapes of baffle assemblies and baffle plates could be used, however, the main feature of the present invention is that the baffles are removable for cleaning and they simply fit loosely within the tubes. Spirally wound baffles happen to be a relatively simple and useful form of baffle.

It will also be appreciated that the condensing unit according to the present invention can be easily provided as a retrofit unit to existing boilers or simply for mounting on top of existing boilers.

In the specification the terms "comprise, comprises, comprised and comprising" or any variation thereof and the terms "include, includes, included and including" or any variation thereof are considered to be totally interchangeable and they should all be afforded the widest possible interpretation.

The invention is not limited to the embodiments hereinbefore described but may be varied in both construction and detail within the scope of the claims.

## Claims

1. A condensing unit (10) for a water heating boiler (1) having a feed connector (9) and a return connector (8) for system water, the condensing unit (10) comprising a body (11) having a heat exchanger tank (15) contacting a condenser flue (20) having an inlet and an outlet for connection to a boiler exhaust gas flue (14), the heat exchanger tank (15) having an inlet (21) for connection to a system return pipe (14) and an
outlet (22) for connection to the boiler return connector (8) wherein the condenser flue (20) comprises
an elongate enclosed channel (16) and a removable baffle assembly (25) mounted therein, **characterised in that** the baffle assembly (25) comprises a longitudinally split tube (35) in two parts (36) to fit within the channel (16) and in which at least one tube part (36) carries inwardly directed combustion gas contacting baffle plates (37).

2. A condensing unit (10) as claimed in claim 1, in which the channels (16) are inclined downwardly from adjacent the inlet to the outlet of the condenser flue (20).

3. A condensing unit (10) as claimed in claim 1 or 2, in which the condenser flue inlet forms a gas inlet manifold (12) for connection to the combustion chamber (3) of the boiler (1), and the condenser flue outlet forms a gas outlet manifold (13) for connection to the gas flue (14).

4. A condensing unit (10) as claimed in claim 3, in which the baffle assembly (25) extends into the gas inlet manifold (12).

5. A condensing unit (10) as claimed in any preceding claim, in which a condensate drain-off pipe (17) is provided adjacent the outlet for the condenser flue (20).

6. A condensing unit (10) as claimed in any preceding claim, in which the baffle assembly (25) is cut-away adjacent its lowermost position contacting the enclosed channel (16) to provide a straight through passage for condensate.

7. A condensing unit (10) as claimed in any preceding claim, in which the channel is a tube (16) and the baffle assembly (25) forms a loose fit within the tube (16).

8. A boiler (1) incorporating a condensing unit (10) as claimed in any preceding claim.

## Patentansprüche

1. Verflüssigungseinheit (10) für einen Wasserheizkessel (1) mit einem Zulaufanschluss (9) und einem Rücklaufanschluss (8) für Systemwasser, wobei die Verflüssigungseinheit (10) einen Körper (11) mit einem Wärmetauscherbehälter (15), der ein Verflüssiger-Ablassrohr (20) mit einem Einlass und einem Auslass zum Anschließen an ein Heizkesselabgas-Ablassrohr (14) berührt, umfasst, wobei der Wärmetauscherbehälter (15) einen Einlass (21) zum Anschließen an ein Systemrücklaufrohr (14) und einen Auslass (22) zum Anschließen an den Heizkesselrücklaufanschluss (8) umfasst, wobei das Verflüssiger-Ablassrohr (20) einen langgestreckten eingeschlossenen Kanal (16) und eine darin angebrachte ausbaubare Leitblechanordnung (25) umfasst, **dadurch gekennzeichnet, dass** die Leitblechanordnung (25) eine längs geteilte Röhre (35) in zwei Teilen (36) umfasst, um in den Kanal (16) zu passen, und wobei mindestens ein Röhrenteil (36) nach innen gerichtete Brenngas berührende Leitbleche (37) trägt.

2. Verflüssigungseinheit (10) nach Anspruch 1, wobei die Kanäle (16) von dem Einlass benachbart zu dem Auslass des Verflüssiger-Ablassrohrs (20) nach unten geneigt sind.

3. Verflüssigungseinheit (10) nach Anspruch 1 oder 2, wobei der Verflüssiger-Ablassrohreinlass einen Gaseinlassverteiler (12) zum Anschließen an die Brennkammer (3) des Heizkessels (1) bildet und der Verflüssiger-Ablassrohrauslass einen Gasauslassverteiler (13) zum Anschließen an das Gasablassrohr (14) bildet.

4. Verflüssigungseinheit (10) nach Anspruch 3, wobei sich die Leitblechanordnung (25) in den Gaseinlassverteiler (12) erstreckt.

5. Verflüssigungseinheit (10) nach einem der vorangehenden Ansprüche, wobei ein Kondensat-Ablaufrohr (17) dem Auslass für das Verflüssiger-Ablassrohr (20) benachbart vorgesehen ist.

6. Verflüssigungseinheit (10) nach einem der vorangehenden Ansprüche, wobei die Leitblechanordnung (25) ihrer den eingeschlossenen Kanal (16) berührenden untersten Stelle benachbart weggeschnitten ist, um einen direkten Durchgang für Kondensat vorzusehen.

7. Verflüssigungseinheit (10) nach einem der vorangehenden Ansprüche, wobei es sich bei dem Kanal um eine Röhre (16) handelt und die Leitblechanordnung (25) locker in der Röhre (16) sitzt.

8. Heizkessel (1), umfassend eine Verflüssigungseinheit (10) nach einem der vorangehenden Ansprüche.

## Revendications

1. Unité à condensation (10) pour une chaudière à eau chaude (1) ayant un connecteur d'alimentation (9) et un connecteur de retour (8) pour l'eau du système, l'unité à condensation (10) comportant un corps (11) ayant un réservoir d'échangeur de chaleur (15) en contact avec un carneau (20) de condenseur ayant un orifice d'entrée et un orifice de sortie à des fins de connexion à un carneau (14) de gaz d'échappement de chaudière, le réservoir d'échangeur de chaleur (15) ayant un orifice d'entrée (21) à des fins de connexion à un tuyau de retour (14) du système et un orifice de sortie (22) à des fins de connexion au connecteur de retour (8) de la chaudière, dans laquelle le carneau (20) de condenseur comporte un canal fermé allongé (16) et un ensemble formant chicane amovible (25) monté dans celui-ci, **caractérisée en ce que** l'ensemble formant chicane (25) comporte un tube (35) fendu dans le sens longitudinal en deux parties (36) à des fins d'adaptation à l'intérieur du canal (16) et dans laquelle au moins une partie (36) du tube porte des plaques de chicane (37) en contact avec des gaz de combustion et dirigées vers l'intérieur.

2. Unité à condensation (10) selon la revendication 1, dans laquelle les canaux (16) sont inclinés vers le bas depuis une région adjacente par rapport à l'orifice d'entrée jusqu'à l'orifice de sortie du carneau (20) de condenseur.

3. Unité à condensation (10) selon la revendication 1 ou la revendication 2, dans laquelle l'orifice d'entrée du carneau de condenseur forme un collecteur d'entrée de gaz (12) à des fins de connexion à la chambre de combustion (3) de la chaudière (1), et l'orifice de sortie du carneau de condenseur forme un collecteur de sortie de gaz (13) à des fins de connexion au carneau de gaz (14).

4. Unité à condensation (10) selon la revendication 3, dans laquelle l'ensemble formant chicane (25) s'étend jusque dans le collecteur d'entrée de gaz (12).

5. Unité à condensation (10) selon l'une quelconque des revendications précédentes, dans laquelle un tuyau d'évacuation de condensat (17) est mis en oeuvre de manière adjacente par rapport à l'orifice de sortie du carneau (20) de condenseur.

6. Unité à condensation (10) selon l'une quelconque des revendications précédentes, dans laquelle l'ensemble formant chicane (25) est découpé de manière adjacente par rapport à sa position la plus basse en contact avec le canal fermé (16) pour la mise en oeuvre d'un passage traversant droit pour le condensat.

7. Unité à condensation (10) selon l'une quelconque des revendications précédentes, dans laquelle le canal est un tube (16) et l'ensemble formant chicane (25) forme un ajustement lâche à l'intérieur du tube (16).

8. Chaudière (1) incorporant une unité à condensation (10) selon l'une quelconque des revendications précédentes.
